(19) Europäisches Patentamt
European Patent Office
Office européen des brevets

(11) **EP 2 154 549 A2**

(12) **DEMANDE DE BREVET EUROPEEN**

(43) Date de publication:
**17.02.2010 Bulletin 2010/07**

(51) Int Cl.:
***G01T 1/16*** *(2006.01)*

(21) Numéro de dépôt: **09354033.4**

(22) Date de dépôt: **31.07.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **12.08.2008 FR 0804574**

(71) Demandeur: **Commissariat à l'Energie Atomique Bâtiment "Le Ponant D"**
**25 rue Leblanc**
**75015 Paris (FR)**

(72) Inventeurs:
• **Aliane, Abdelkader**
**38000 Grenoble (FR)**
• **Farjot, Thierry**
**38450 Le Gua (FR)**
• **Pigot, Claude**
**78720 Saint Forget (FR)**

(74) Mandataire: **Hecké, Gérard et al**
**Cabinet HECKE**
**10 rue d'Arménie - Europole**
**BP 1537**
**38025 Grenoble Cedex 1 (FR)**

(54) **Détecteur de rayonnement électromagnétique et procédé de fabrication**

(57) Le détecteur de rayonnement électromagnétique comporte au moins une membrane d'absorption du rayonnement considéré. La membrane d'absorption est constituée par une couche d'absorption (4) en nitrure de tungstène ($W_2N$) ayant un rapport stoechiométrique de tungstène sur le nitrure égal à deux.

Figure 2

## Description

## Domaine technique de l'invention

L'invention est relative à un détecteur de rayonnement électromagnétique comportant au moins une membrane d'absorption du rayonnement considéré.

## État de la technique

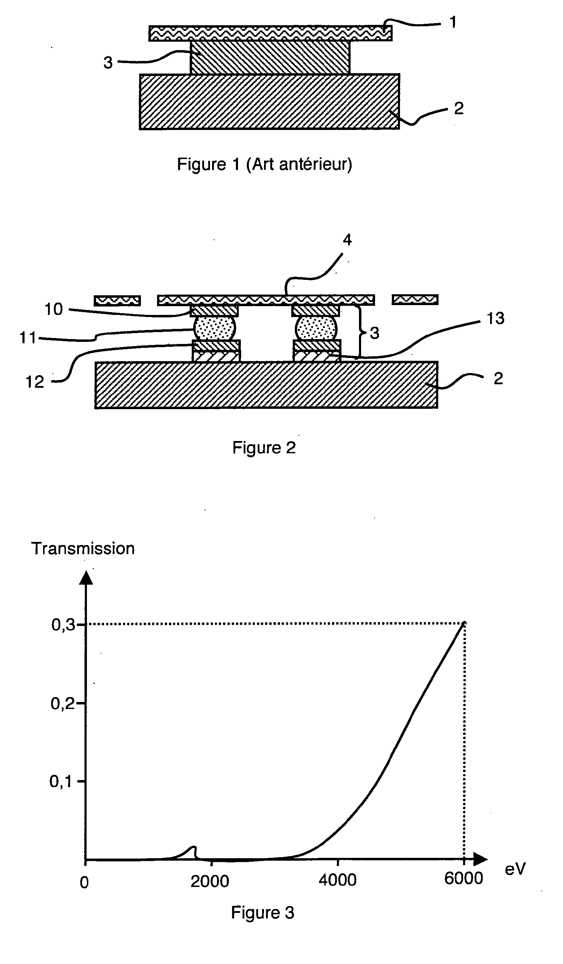

Les détecteurs de rayonnement électromagnétique permettent de convertir l'énergie du rayonnement considéré en chaleur au sein d'une membrane d'absorption 1. Comme illustré à la figure 1, la membrane d'absorption 1 est classiquement reliée à un thermomètre 2 par une couche d'assemblage 3 permettant le transfert de la température.

Dans le cas des détecteurs de rayonnement X, les membranes d'absorption de rayonnement X sont soit résistives, c'est-à-dire que la résistance du matériau thermomètre varie en fonction de la température, soit supraconductrices. Pour améliorer la sensibilité du détecteur, la capacité calorifique de la membrane d'absorption 1 doit être la plus faible possible. Ainsi, il est préférable d'utiliser des matériaux supraconducteurs dont la capacité calorifique s'annule en dessous de leur température de transition supraconductrice, c'est-à-dire qu'en dessous de cette température, la résistance devient nulle.

De manière générale, les détecteurs utilisés en astrophysique fonctionnent à de très basses températures, typiquement de 50 à 100mK, pour détecter des rayonnements X dans une gamme allant de 100eV à 6keV et pouvant atteindre jusqu'à 30keV dans le domaine de la recherche spatiale.

De manière connue, les membranes d'absorption à base de matériaux supraconducteurs peuvent être réalisées en alliage de cuivre et de bismuth (CuBi), ou de bismuth et d'or. Bien que ces matériaux soient dotés de bonnes propriétés supraconductrices, ils présentent une absorption relativement faible aux rayonnements X.

Les rayonnements X interagissent avec la matière et leur absorption dépend du numéro atomique Z du matériau utilisé et de sa densité. En effet, plus un matériau a un numéro atomique élevé, plus il est dense et donc plus il absorbe. C'est pourquoi des matériaux supraconducteurs ayant des numéros atomiques Z élevés sont utilisés dans la réalisation de détecteurs de rayonnement X. C'est notamment le cas du tellure de mercure (HgTe), du rhénium (Re), de l'iridium (Ir) et du tantale (Ta).

## Objet de l'invention

L'objet de l'invention a pour but un détecteur de rayonnement électromagnétique, notamment de rayonnement X, dont la couche d'absorption comporte un pourcentage d'absorption élevé.

Ce but est atteint par le fait que la membrane d'absorption est constituée par une couche d'absorption en nitrure de tungstène ayant un rapport stoechiométrique de tungstène sur le nitrure égal à deux.

L'invention a aussi pour objet un procédé de fabrication du détecteur de rayonnement électromagnétique comportant les étapes successives suivantes :

- le dépôt d'une couche de nitrure de tungstène sur une couche d'oxyde de silicium recouvrant un premier substrat de support, ladite couche de nitrure de tungstène ayant un rapport stoechiométrique de tungstène sur le nitrure égal à deux
- le report de la face du premier substrat de support comportant la couche de nitrure de tungstène, sur un film adhésif disposé sur un second substrat de support,
- l'élimination du premier substrat de support et de la couche d'oxyde de silicium.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 illustre un détecteur électromagnétique selon l'art antérieur.
La figure 2 illustre, en vue de coupe, un détecteur selon l'invention.
La figure 3 représente la courbe de transmission des rayonnements X en fonction de l'énergie photonique d'une couche d'absorption en nitrure de tungstène.
Les figures 4 et 5 représentent des courbes de transmission des rayonnements X en fonction de l'énergie photonique de couches d'absorption selon l'art antérieur.
Les figures 6 à 14 illustrent un procédé de fabrication d'un détecteur selon l'invention.

## Description d'un mode de réalisation particulier

Le détecteur de rayonnement électromagnétique, notamment de rayonnement X, comporte classiquement au moins un pixel muni d'une membrane d'absorption 1 du rayonnement considéré et d'un thermomètre 2 relié à la membrane d'absorption 1 par une couche d'assemblage 3. Selon l'invention, la membrane d'absorption 1 est constituée une couche d'absorption 4 en nitrure de tungstène ($W_2N$) ayant un rapport stoechiométrique W/N de tungstène sur le nitrure égal à 2 (W/N = 2).

Le nitrure de tungstène $W_2N$ est un supraconducteur à haute température de transition Tc. En effet, pour une densité volumique d'environ 18g/cm3, sa température de transition Tc peut être de 4,57K.

Il est possible d'évaluer le pourcentage de rayonnement X absorbé par une couche d'absorption.

La transmission des rayonnements peut être calculée à partir de l'atténuation de l'intensité du rayonnement X selon l'expression :

$$I = I_0 \exp^{-(\frac{\mu}{\rho})\rho L}$$

dans laquelle $I_0$ est l'intensité du flux incident sur l'absorbeur,

$\dfrac{\mu}{\rho}$ est le coefficient d'absorption massique exprimé en $cm^2.g^{-1}$,

$\rho$ la masse volumique du matériau constituant l'absorbeur (exprimée en $g.cm^{-3}$),

$\mu$ le coefficient d'absorption linéaire du matériau constituant la plaque (exprimé en $cm^{-1}$),

et L l'épaisseur de l'absorbeur (en cm).

Comme l'illustre la figure 3, pour une épaisseur de couche d'absorption de $2\mu m$, et une densité de 17,7, la simulation de la transmission des rayonnements X dans la gamme 100eV à 6000eV par une couche en nitrure de tungstène ($W_2N$) fournit une valeur de 0,3 pour la transmission à 6000eV, soit une absorption de 70%.

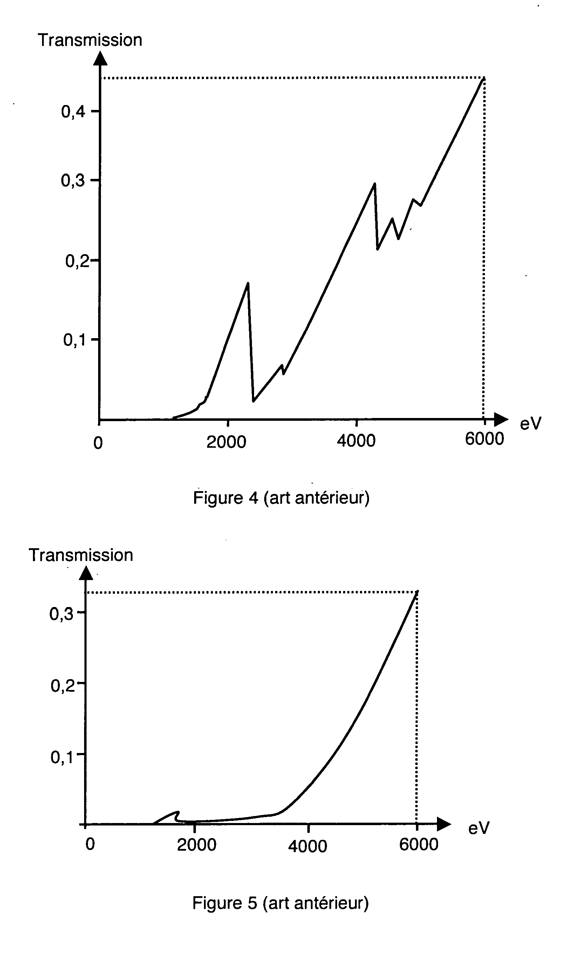

À titre de comparaison, la figure 4 illustre cette même courbe pour une couche d'absorption de $2\mu m$ d'épaisseur en tellurite de mercure (HgTe) ayant une densité de 8,09. La simulation de la transmission des rayonnements X dans la gamme allant de 100eV à 6000eV pour une couche en HgTe fournit une transmission de 0,44 à 6000eV, soit une absorption de 56%. De plus, la courbe représentative de la transmission en fonction de l'énergie photonique présente des pics de transmission parasites à 2 et 4 keV.

De même, la figure 5 illustre la courbe de transmission simulée du tantale (Ta) pour une densité de 16,654 et une épaisseur de couche d'absorption de $2\mu m$. À 6000eV, le pourcentage d'absorption est de 68% (transmission de 0,32).

Le nitrure de tungstène présente donc une meilleure absorption des rayonnements X que les couches d'absorption connues en tellurite de mercure ou en tantale.

De plus, à plus haute énergie (supérieure à 6000eV) le gain d'absorption du nitrure de tungstène ($W_2N$) est supérieur à celui du tantale si on augmente l'épaisseur de la couche de nitrure de tungstène $W_2N$. De préférence, la couche de nitrure de tungstène a une épaisseur comprise entre 0,1 et 10 $\mu m$.

Une épaisseur de nitrure de tungstène supérieure à $10\mu m$ est possible, mais ne diminue pas, ou n'améliore pas, les performances.

Cependant, le nitrure de tungstène ($W_2N$) est un matériau difficile à réaliser en couche mince. Comme beaucoup de nitrures, c'est un matériau très contraint et la réalisation d'une couche de plus de $1\mu m$ d'épaisseur est délicate. L'invention concerne donc également un procédé permettant de faciliter cette fabrication.

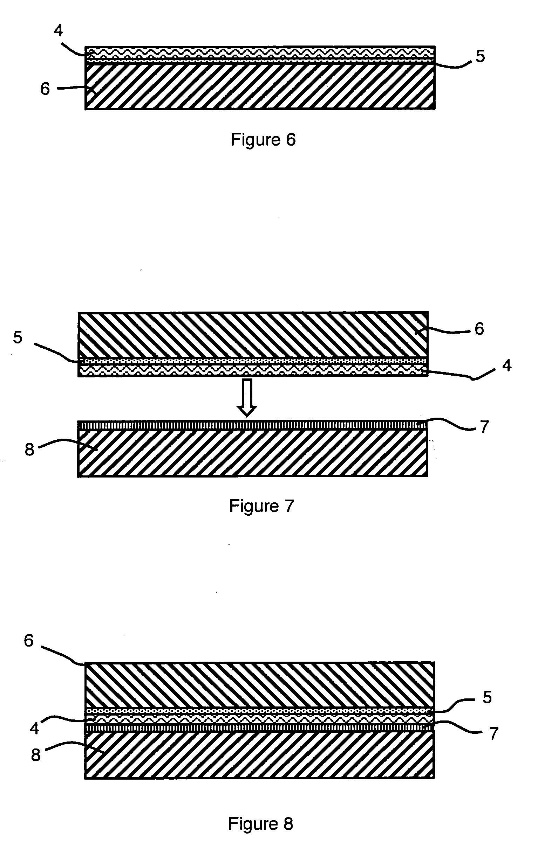

Le procédé décrit ci-dessous, en référence aux figures 6 à 14, permet de fabriquer un détecteur comportant une membrane d'absorption constituée par une couche 4 mince de nitrure de tungstène ($W_2N$). Le procédé comporte tout d'abord une étape de dépôt d'une couche 4 de nitrure de tungstène (figure 6), de préférence de $2\mu m$ d'épaisseur sur une couche d'oxyde de silicium 5 recouvrant un premier substrat de support 6. Le substrat de support 6 peut avoir une épaisseur de l'ordre de $725\mu m$ et la couche d'oxyde de silicium une épaisseur de l'ordre de 500nm.

Le dépôt de la couche 4 de nitrure de tungstène ($W_2N$) est réalisé, par exemple, par dépôt en phase vapeur (PVD, « Physical Vapor Deposition » en anglais). Ainsi, le mélange réactif entre le tungstène et le nitrure se fait directement dans la chambre de dépôt. Afin de minimiser les contraintes, la pression de dépôt a été modifiée tout en maintenant entre les gaz neutres de l'enceinte, par exemple l'argon (Ar) et l'azote (N), un rapport de pression constant pour maintenir la stoechiométrie du dépôt à deux. Lors de la fabrication, des tests ont permis de mesurer un rapport W/N de 2,07 par une analyse classique des électrons rétrodiffusés (« RBS » pour Rutherford Back Scattering en anglais). Par ailleurs, la résistivité de la couche ainsi obtenue est égale à $156\mu ohm.cm$ à température ambiante.

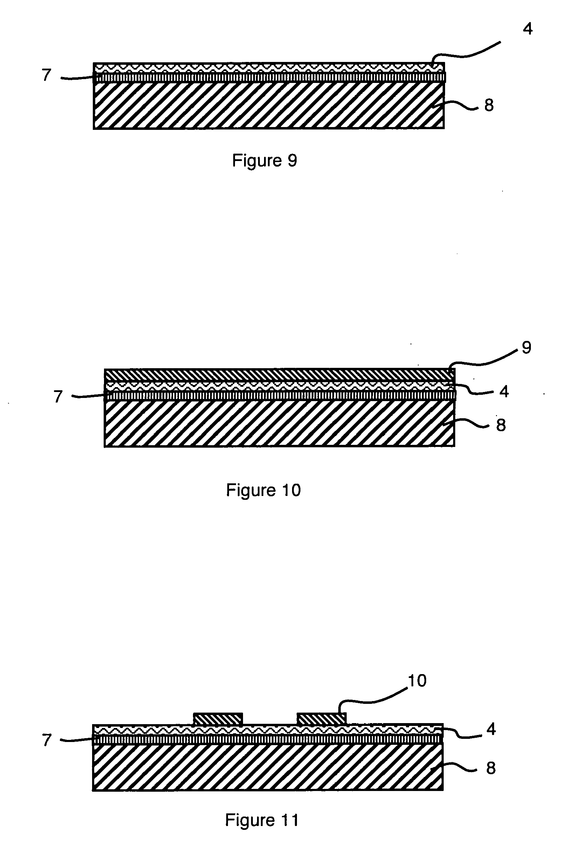

Ensuite, un film adhésif 7 double face est collé (figure 7) sur un second substrat (figure 7) de support 8 en silicium. Puis, la face du premier substrat de support 6 comportant la couche 4 de nitrure de tungstène est collée sur la face libre du film adhésif 7. Le substrat de support 8 sert aussi de poignée en silicium permettant de manipuler la couche de nitrure de tungstène sans l'endommager. Une fois collé (figure 8), le premier substrat de support 6 et la couche d'oxyde de silicium 5 sont éliminés, de préférence par polissage mécano-chimique (PCM) de manière à laisser libre la couche 4 de nitrure de tungstène (figure 9).

Une couche d'assemblage 3 permettant de relier l'absorbeur en nitrure de tungstène à un thermomètre est ensuite réalisée. Puis, la couche d'assemblage 3 et la couche 4 de nitrure de tungstène sont structurées en pixels.

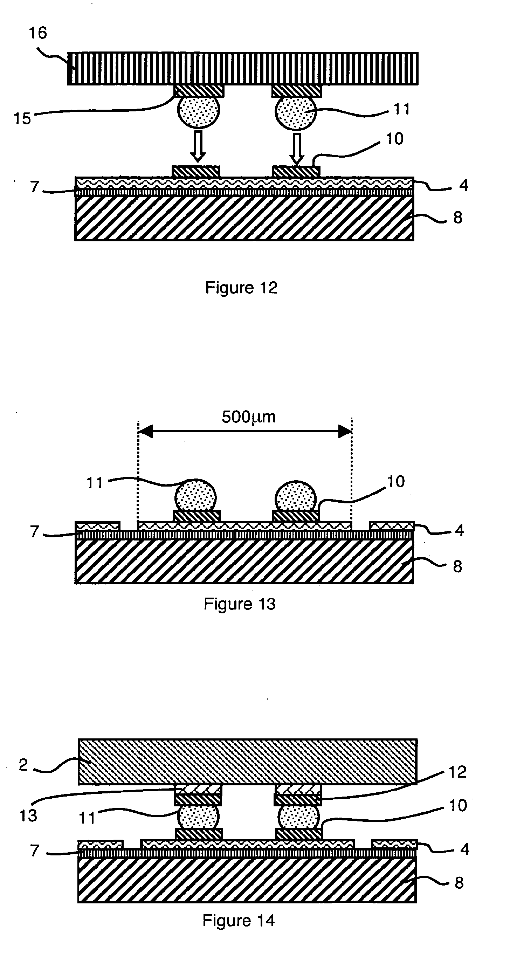

À titre d'exemple, la couche d'assemblage 3 faisant la liaison entre la couche d'absorption 4 en nitrure de tungstène et le thermomètre 2 est réalisée à base d'or et d'un matériau à base d'indium. De préférence, le matériau à base d'indium est formé par des billes d'indium ou un alliage d'indium. Ainsi, l'étape de réalisation de la couche d'assemblage 3 peut comporter le dépôt d'une fine couche d'or 9 (figure 10) sur la couche de nitrure de tungstène 4. L'épaisseur de cette couche d'or 9 est, de préférence, de 150nm. Ensuite, la couche en or 9 est gravée, jusqu'à la couche de nitrure de tungstène 4, pour former des plots de connexion 10 à la surface de la couche de nitrure de tungstène 4. Sur chaque plot de connexion 10, est ensuite déposée une bille d'indium 11 initialement instable (figure 12) par l'intermédiaire d'un support 16 muni de contacts 15 (UBM pour « Under Bump Metal » en anglais) comportant, par exemple, une couche de titane de 300nm d'épaisseur, en contact avec le support 16, et une couche d'or, de préférence, de 70nm d'épaisseur en contact direct avec la bille d'indium 11 correspondante. Les billes d'indium sont qualifiées d'initialement instable car le contact 15 comporte peu d'or et a donc une faible mouillabilité. Les billes 11 sont destinées à servir d'éléments de connexion électrique. Une fois les billes 11 déposées, la couche d'or des plots de connexion 10, plus épaisse que celle des contacts 15, permet de stabiliser les billes d'indium en améliorant la mouillabilité. Puis, la couche de nitrure de tungstène 4 est structurée en pixels par simple gravure jusqu'au film adhésif 7, comme illustré à la figure 13. De préférence, chaque pixel a la forme d'un carré de 500μm de côté. La couche d'assemblage 3 peut aussi être réalisée à base d'un matériau polymère conducteur de type colle epoxy SU8® reliant la couche d'absorption en nitrure de tungstène 4 au thermomètre 2.

Après la structuration de la couche de nitrure de tungstène 4, un thermomètre 2 comportant des bornes de connexion 12 est reporté et hybridé sur la couche d'assemblage 3 de chaque pixel.

Le thermomètre peut être à base de silicium cristallin ou amorphe. Le thermomètre peut aussi être à transition supraconductrice (TES pour « Transition Edge Sensor » en anglais). Un tel thermomètre à transition supraconductrice peut, par exemple, comporter une couche de titane et une couche d'or ou une couche de molybdène et une couche d'or, la couche d'or pouvant alors directement former les bornes de connexion 12 en contact avec la couche d'assemblage 3.

Les bornes de connexion 12 sont disposées sur le thermomètre 2, de manière à être en regard des billes d'indium 11 lors du report du thermomètre 2. Les bornes de connexion 12 peuvent être en or. De préférence, un élément 13 est intercalé entre les bornes de connexion 12 et le thermomètre 2. Cet élément 13 peut comporter une couche d'accrochage en contact avec le thermomètre et une couche de barrière à la diffusion de l'indium intercalé entre la couche d'accrochage et la borne de connexion 12 correspondante. La couche d'accrochage peut être à base de titane et la couche de barrière à la diffusion peut être en nickel ou palladium.

Après report du thermomètre 2 sur les billes d'indium 11, le thermomètre 2 est fixé avec la couche d'absorption en nitrure de tungstène, par stabilisation des billes d'indium, pour former un pixel. La fixation ou hybridation des billes d'indium est réalisée par refonte, à ce moment il se forme un intermétallique, avec l'or des plots de connexion 10, les billes d'indium et l'or des bornes de connexion 12, qui va stabiliser les billes d'indium.

Enfin le second substrat de support 8 est détaché par dissolution du film adhésif 7 dans un solvant, par exemple de l'acétone. Après dissolution de l'adhésif, on obtient le détecteur illustré à la figure 2.

Un tel dispositif présente une très bonne absorption des rayonnements X. De plus le nitrure de tungstène présente l'avantage de ne pas avoir à subir de traitement supplémentaire pour être utilisé comme absorbeur de rayonnement X.

Le dispositif obtenu peut être utilisé dans des applications nécessitant une haute résolution des rayonnements X, notamment dans le domaine de l'astronomie, de l'astrophysique, de l'analyse des matériaux, de la physique des neutrons ou encore dans la recherche de la matière noire.

**Revendications**

1. Détecteur de rayonnement électromagnétique comportant au moins une membrane d'absorption (1) du rayonnement considéré, **caractérisé en ce que** la membrane d'absorption (1) est constituée par une couche d'absorption en nitrure de tungstène (4), ayant un rapport stoechiométrique de tungstène sur le nitrure égal à deux.

2. Détecteur selon la revendication 1, **caractérisé en ce que** la couche d'absorption en nitrure de tungstène (4) est reliée à un thermomètre (2) par une couche d'assemblage (3) comportant un matériau à base d'indium ou un matériau polymère conducteur.

3. Détecteur selon la revendication 2, **caractérisé en ce que** le thermomètre (2) est à base de silicium cristallin ou amorphe.

4. Détecteur selon la revendication 2, **caractérisé en ce que** le thermomètre est un thermomètre à transition supraconductrice.

5. Détecteur selon la revendication 4, **caractérisé en ce que** le thermomètre à transition supraconductrice comporte une couche de titane en contact avec une couche d'or, ladite couche d'or étant en contact avec la couche d'assemblage (3).

6. Détecteur selon l'une quelconque des revendications 1 à 5, **caractérisé en ce que** la couche de nitrure de tungstène a une épaisseur comprise entre 0,1μm et 10μm.

7. Procédé de fabrication d'un détecteur selon l'une quelconque des revendications 1 à 6, **caractérisé en ce qu'**il comporte au moins les étapes successives suivantes :

    - le dépôt d'une couche de nitrure de tungstène (4) sur une couche d'oxyde de silicium (5) recouvrant un premier substrat de support (6), ladite couche de nitrure de tungstène ayant un rapport stoechiométrique de tungstène sur le nitrure égal à deux,

- le report de la face du premier substrat de support (6) comportant la couche de nitrure de tungstène (4), sur un film adhésif (7) disposé sur un second substrat de support (8),
- l'élimination du premier substrat de support (6) et de la couche d'oxyde de silicium (5).

8. Procédé selon la revendication 7, **caractérisé en ce qu'**il comporte ensuite :

- la réalisation d'une couche d'assemblage (3),
- la structuration en pixels de la couche de nitrure de tungstène (4) et de la couche d'assemblage (3),
- le report et l'hybridation, d'un thermomètre (2) sur la couche d'assemblage (3) de chaque pixel,
- la libération des pixels dans un solvant permettant de dissoudre le film adhésif (7).

9. Procédé selon la revendication 8, **caractérisé en ce que** l'étape de réalisation de la couche d'assemblage comporte :

- le dépôt d'une couche d'or (9) sur la couche de nitrure de tungstène (4),
- la structuration de plots de connexion (10) sur la couche d'or (9),
- et le transfert sur chaque plot de connexion (10) d'une bille d'indium (11) initialement instable.

Figure 1 (Art antérieur)

Figure 2

Figure 3

Figure 4 (art antérieur)

Figure 5 (art antérieur)

4

5

6

Figure 6

5

6

4

7

8

Figure 7

6

5

4

7

8

Figure 8

Figure 9

Figure 10

Figure 11

16

15

11

10

7

4

8

Figure 12

500μm

11

10

7

4

8

Figure 13

2

13    11

12

10

7

4

8

Figure 14